(19)

Europäisches
Patentamt
European
Patent Office
Office européen
des brevets

(11) **EP 1 748 671 A1**

(12) **EUROPEAN PATENT APPLICATION**

(43) Date of publication:
**31.01.2007 Bulletin 2007/05**

(51) Int Cl.:
*H04Q 11/04* (2006.01)     *H04L 12/28* (2006.01)

(21) Application number: **05254769.2**

(22) Date of filing: **29.07.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **BRITISH TELECOMMUNICATIONS
public limited company
London EC1A 7AJ (GB)**

(72) Inventor: **The designation of the inventor has not
yet been filed**

(74) Representative: **Williamson, Simeon Paul et al
BT Group Legal
Intellectual Property Department
PP C5A
BT Centre
81 Newgate Street
London EC1A 7AJ (GB)**

(54) **Method and apparatus for communicating data over a data network**

(57)     A management device (100) for automatically
provisioning a Broadband Remote Access Server
(BRAS) (40) for use in connecting Customer Premises
Equipment (CPE) (10) to an Internet Protocol (IP) net-
work (50) via a Digital Subscriber Line (DSL) (19) a Digital
Subscriber Line Access Multiplexor (DSLAM) (20) and
the BRAS (40), the management device (100) compris-
ing:
a first interface for receiving from time to time data read-
ings from the DSLAM (20) indicative of the current or recent line rate of the DSL;
a processor unit for calculating from the received data
readings a consistent rate indicative of a consistent line
rate of the DSL (19) based on a plurality of data readings
for the DSL (19) from the DSLAM (20); and
a second interface for transmitting provisioning messag-
es to the BRAS (40) for provisioning the BRAS (40) to
restrict data flowing to the DSL (19) to a maximum rate
selected by the management device (100) in accordance
with the calculated consistent rate.

Figure 1

**Description**

**Field of the Invention**

The present invention relates to a method and apparatus for communicating data over a data network. In particular, it relates to controlling the amount of bandwidth which a user can transmit or receive over an Asynchronous Digital Subscriber Line (ADSL) connection and an access network to the user's Internet Service Provider (ISP).

**Background to the Invention**

ITU recommendation G992.1 specifies how the maximum bandwidth which can be supported over a particular ADSL connection between a particular Remote ADSL Transceiver Unit (ATU-R) and a particular Central office or network operator ADSL Transceiver Unit (ATU-C) may be determined at the time of initiation of the ADSL connection (see G992.1 Chapter 10) and may even be periodically re-negotiated during a connection (see G992.1 Appendix II); the maximum bandwidth in fact depends upon various factors which will differ from line to line and from time to time depending on things such as the amount of electromagnetic noise present in the environment of the ATU-R, etc.

However, despite this, it is common in most practical implementations of ADSL for a network operator to offer an end user a fixed bandwidth (commonly offered values being 500 kb (kilo bits/second, 1 Mb (Mega bits/second) and 2 Mb). In such circumstances, the initiation process happens in the standard way to establish the maximum bandwidth available over the connection, but instead of then setting up the connection at that maximum setting, it is simply checked whether or not this maximum is at least equal to the contractually agreed bandwidth, and if so, then the connection is made at this agreed amount (rather than the maximum available) but otherwise the connection is just not made at all.

For IP connections passing through the Access Network via an ADSL connection to an Internet Service Provider (and thus via a Point Of Presence (POP) to the Internet), in a typical currently extant access network, there are two aggregation points. One occurs at the Digital Subscriber Line Access Multiplexer (DSLAM) (discussed above) and the other occurs at a device known as the Broadband Remote Access Server (BRAS - pronounced "Bee Raz"). The BRAS polices data flowing from ISPs through the BRAS and on through the access network towards the DSLAM and ensures that the rate at which each ISP sends data to any given end user complies with a profile which is stored in respect of each end user and includes the maximum rate at which the end user is able to receive data (which is determined by the contractually agreed connection rate, e.g. 1Mb). Any data sent in excess of the maximum permitted rate is thrown away by the BRAS which causes the sending source to throttle back its rate of transmission (by the normal operation of the Transport Control Protocol (TCP)) until it approaches the maximum rate permitted by the BRAS.

In addition, each ISP has a maximum permitted aggregated rate at which it may send data to all of its customers at any one time, through any particular BRAS. Usually an ISP will purchase sufficient capacity to maintain a predetermined number of its end users at full capacity at any one time, which predetermined number will typically represent only a small fraction of the total number of customers to which it is connected via the respective BRAS, since only a small number of users is expected to be downloading data simultaneously via a single BRAS at any one time. If too many customers are on-line and downloading data at any one time, the BRAS will reduce the amount of data sent to each user proportionality in order to bring the total amount of data transported down to a rate which satisfies the agreement between the access network operator and the ISP.

It would be desirable to provide a system in which, instead of setting up an ADSL connection at a prearranged bandwidth or not at all, the connection is set up at the maximum bandwidth which the connection can establish. Naturally, in order to permit the full rate of data to be transmitted over the ADSL connection, it is necessary that the respective BRAS also permits at least that rate of data for that connection to be passed through the BRAS onto the access network.

The present applicant is aware of two previously proposed approaches for achieving this in cases where the ADSL connection bandwidth is not constrained to take on only a single value. One approach, which it is believed is currently in operation in New Zealand, is to not limit the amount of data which can pass through the BRAS in respect of any one connection, but simply to enforce that data from a single ISP may not exceed a certain amount. The end user (and/or the end user's machine on behalf of the end user) may negotiate with his/her ISP after the ADSL connection has been set up such that the ISP may allow data to pass into the access network at a rate which matches that which the ADSL connection can support. Alternatively data is sent at a rate settled by the TCP protocol (i.e. if a source is sending data too quickly - for whatever reason - packets will be lost until a rate is arrived at which ceases to cause packet loss). This approach should work reasonably well on networks which are not heavily used, but in more congested networks it is very inefficient.

An alternative proposed approach is that hinted at in the DSL Forum's Technical Report No. TR-059. In this report it suggests that the "BRAS MUST be provisioned so that it does not allow traffic to flow faster than the DSL "sync" rate [which is the maximum rate which the ADSL connection can support as determined by the ATU's at the time of setting up the connection]. The BRAS MAY be provisioned with the actual DSL sync rate to accomplish this." -

see section 4.2.5.4 of TR-059 (which is on Page 21 of Version 10 of TR-059). Naturally, since TR-059 is a list of requirements rather than a description of a working system, it does not specify how this could be achieved. However, it seems to teach in the direction of communicating with the BRAS about each ADSL connection, at least every time such a connection is set up. However this solution would place a very heavy signalling burden on the access network and on each BRAS, given the current infrastructure in a typical access network for communicating with BRAS's.

## Summary of the Invention

According to a first aspect of the present invention, there is provided a method of providing a broadband data connection to an end user via an end user Digital Subscriber Line, DSL, modem, a local loop, a Digital Subscriber Line Access Multiplexer, DSLAM, an access network, a Broadband Remote Access Server, BRAS, and an onward connection to a service provider which may have a Point Of Presence on the Internet Backbone, the method comprising the steps of initiating a Digital Subscriber Line, DSL, connection over the local loop between the end user DSL modem and the DSLAM, determining the maximum attainable rate at which data may be transmitted downstream to the end user DSL modem over the DSL connection as determined between the end user DSL modem and the DSLAM, comparing the determined maximum attainable rate with a stored consistent value and, if the maximum attainable rate is lower than the stored consistent value, reducing the stored consistent value to the maximum attainable rate or, if the maximum attainable rate is equal to or greater than the stored consistent value, processing the maximum attainable rates determined on a predetermined number of the most recent occasions when a DSL connection has been initiated over the local loop to ascertain if the maximum attainable rate has consistently been higher than the stored consistent value, and if so, increasing the stored consistent value to the lowest higher rate consistently achieved; the method further including sending a message to the BRAS to inform it to limit traffic destined for the end user to a rate which is less than or equal to the stored consistent value.

According to a second aspect of the present invention, there is provided a management device for assisting the making of broadband data connections to end users each via an end user DSL modem, a local loop, a Digital Subscriber Line Access Multiplexer, DSLAM, an access network, a Broadband Remote Access Server, BRAS, and an onward connection to a service provider which may have a Point Of Presence on the Internet Backbone, the device including a DSLAM interface for receiving messages from the or each DSLAM and a BRAS interface for transmitting messages to the or each BRAS, a data store for storing data in respect of each connection with which it is associated and a processor unit for processing messages received from the or each DSLAM in combination with data stored in the data store to generate control messages for sending to the or each BRAS.

Preferably, in operation, the management device receives from the or each DSLAM messages indicating the maximum attainable rate at which data may be transmitted downstream to the end user DSL modem over the DSL connection as determined between the end user DSL modem and the DSLAM in respect of each DSL connection with which the management device is associated, processes these messages to determine, in respect of each connection, a consistent data rate which the connection has consistently been able to achieve over a predetermined period of time or for a predetermined number of connection initiations and, whenever this consistent rate changes for a particular connection, generates a message to send to the corresponding BRAS informing it of the new consistent data rate for that connection.

Preferably the management device is further operable to reduce the consistent data rate immediately to the maximum attainable rate most recently received from the DSLAM if this is less than the currently stored consistent data rate and then to generate a message straight away to go to the respective BRAS to inform it of the new consistent data rate.

Note that in practice the DSLAM may report a gross maximum attainable rate which includes the bandwidth required for signalling purposes. However, reference to the maximum attainable rate in the present specification means the net maximum attainable rate at which user data may be transmitted (i.e.,the gross maximum attainable rate minus that portion required for signalling). Calculation of the amount of bandwidth required for signalling may conveniently be performed by the management device or alternatively it may be performed by the BRAS.

By looking for a consistently achievable rate at which to set the BRAS, the number of messages that need to be sent to the BRAS can be dramatically reduced whilst still maintaining a good service to each end user. However, by ensuring that if the maximum attainable rate ever drops below that at which the BRAS is currently set, then a message is sent out immediately to lower the BRAS setting, the user will not experience dropped traffic even if an unusually low maximum attainable rate is negotiated for a particular connection initiation.

Further aspects of the invention include processor implementable instructions for causing a processor controlled device to carry out the method of the first aspect of the present invention and carrier means carrying such processor implementable instructions.

## Brief Description of the Figures

In order that the present invention may be better understood, embodiments thereof will now be described, by way of example only, with reference to the accompanying drawings in which:

Figure 1 is a schematic block diagram illustrating a telecommunications network incorporating a management device according to a first aspect of the present invention;

Figure 2 is a schematic block diagram illustrating the management device of Figure 1 in more detail ; and

Figure 3 is a Flow diagram illustrating the steps carried out by the system of Figure 1 to maintain the BRAS settings at appropriate values.

## Detailed Description of Embodiments

## Main Embodiment

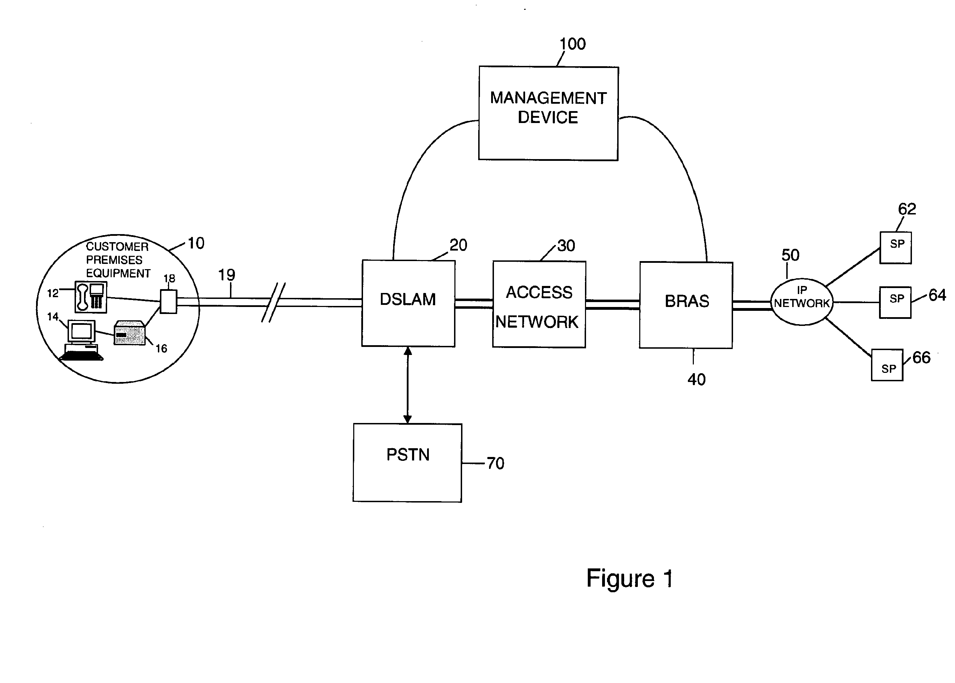

Referring to Figure 1, a first embodiment of the present invention is illustrated in overview. A copper pair loop 19 connects customer premises equipment 10 to a DSLAM 20 located within a local exchange (also known as a central office in the US). The DSLAM separates normal voice traffic and data traffic and sends the voice traffic to the Public Switched Telephone Network (PSTN) 70. The data traffic is passed on through an Access Network 30 (which will typically be an ATM network as is assumed in this embodiment) to a Broadband Remote Access Server (BRAS) 40 at which several IP traffic flows from (and to) multiple Service Providers (SP's) 62, 64, 66 are aggregated (and disaggregated) via an IP network 50 (which may, of course, itself be provided on top of an ATM network). Within the customer premises equipment 10, there is an ADSL splitter filter 18 a telephone 12 and ADSL modem 16 and a computer 14.

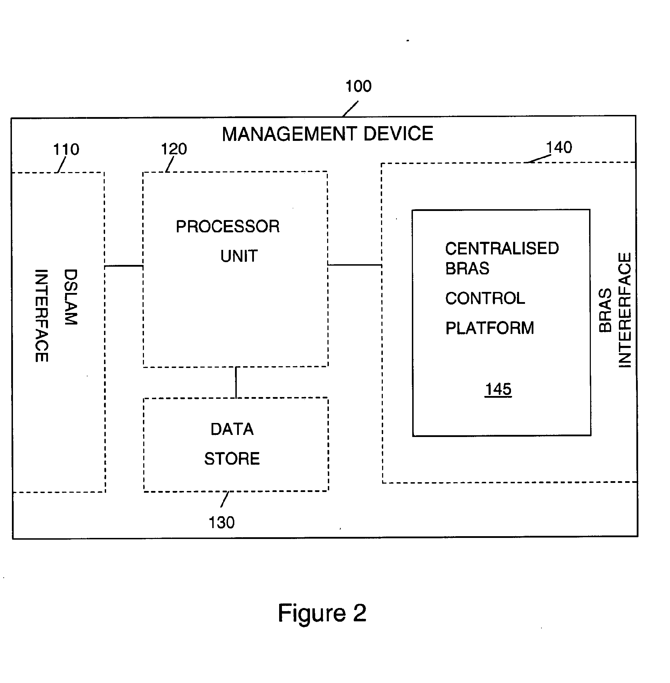

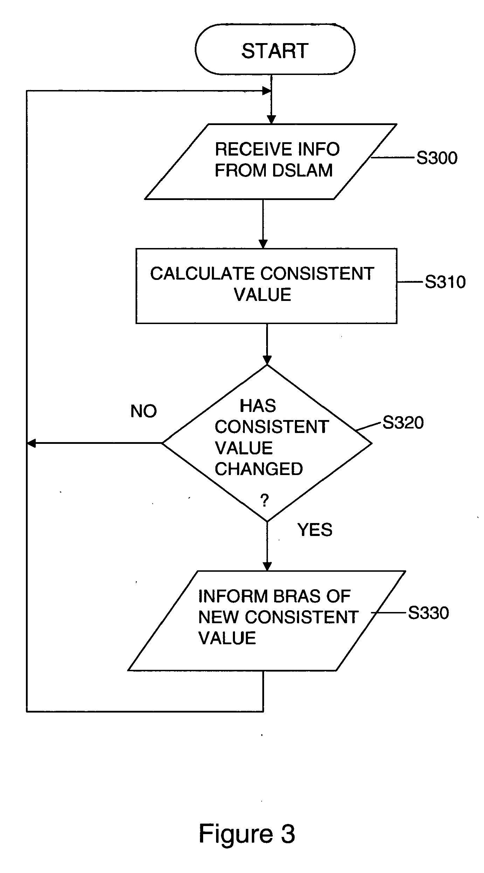

The above mentioned arrangement of items 10, 19, 20, 30, 40, 50, 62, 64, 66 and 70 is conventional. However, in addition to this conventional arrangement, in the present embodiment there is a management device 100 which communicates between the DSLAM 20 and the BRAS 40. The detailed operation of this device is explained in greater detail below with reference to Figures 2 and 3. However, in overview it obtains information from the DSLAM 20 about the rate at which each Digital Subscriber Line (DSL) connects to the DSLAM (in the present embodiment this is done by periodically polling the DSLAM - four times per day - and asking it for two related items of data in respect of the DSL: the Actual Line Rate and the Maximum Achievable Line Rate - these are discussed in greater detail below). The management device then processes this this information to assess a consistent connection speed achieved by each such DSL. If it determines that this consistent rate has increased as a result of recent higher rate connections, it instructs the BRAS to allow higher through flows of traffic for that DSL. On the other hand, if it detects that a particular connection speed is below the stored consistent value, it reduces the consistent value to the current connection rate and immediately informs the BRAS of the new consistent value rate so that the BRAS does not allow more traffic to flow to the DSL than the DSL is currently able to cope with.

The exact algorithm used by the management device to calculate the consistent rate in the present embodiment is described below. However, it should be noted that the intention of the algorithm is to arrange that the user will receive data at the highest rate which his/her DSL is consistently able to obtain without requiring the BRAS to be reconfigured every time the DSL is connected. At the same time the algorithm seeks to ensure that if the DSL connects at a rate which is below that at which the BRAS is currently configured to allow data through, then the BRAS is quickly reconfigured to avoid overloading the DSLAM. The reason for wanting to avoid having to contact the BRAS each time a DSL connects to the DSLAM is because with current systems it is not generally possible to reconfigure the BRAS without a significant delay (e.g. of a few minutes). Furthermore, there is a limit to the rate at which a BRAS can process reconfiguration requests. These restrictions are sometimes referred to by saying that the BRAS needs to be provisioned, and drawing a distinction between systems which are switched (e.g. ATM Switched Virtual Circuits) and systems which are provisioned. Current systems allow for quite quick provisioning (often a matter of minutes rather than days or weeks) but there is still a significant difference between such quick provisioning and realtime switching.

Referring now to Figure 2, the management device 100 of the present embodiment comprises a DSLAM interface 110, a processor unit 120 a data store 130 and a BRAS interface 140. In the present embodiment, the BRAS interface 140 includes a centralised BRAS control platform 145 such as that currently found in many broadband access networks and conventionally used to provision the BRAS in accordance with a particular profile as agreed between a Service Provider and its customer (to whom the ADSL service is being provided). As mentioned above, this is conventionally done on a very static basis (e.g. a customer purchases a 1 Mbps ADSL service and the BRAS is configured to allow a corresponding rate of data through to the DSL in question). In the present embodiment the pre-existing centralised BRAS control platform is used as the BRAS control platform 145 forming part of the BRAS interface 140 and it is therefore physically separate from the rest of the management device 100 however this need not be the case in other embodiments.

The data store 130 maintains in respect of each DSL which it is managing (note that it is anticipated that a single management device 100 will cover an entire country- or region-wide broadband access network and may therefore be managing up to several million such lines) an indication of the current consistent rate for that line, historical information about the data retrieved from the DSLAM during preceding polls (explained in greater detail below) and physical data about the DSL such as the DSLAM to which it is connected (and the port on the DSLAM to which it is connected) and the BRAS 40 through which it is connected to the IP Network 50.

In the present embodiment the Management device (apart from the BRAS control platform 145) is implemented on a single server computer. However in alternative embodiments in which many millions of lines may need to be managed the management device 100 may be implemented on plural distributed server computers and the data store 130 may be provided by a separate data warehousing function, etc.

Referring now to Figure 3, in overview, the method employed by the management device comprises an input step of receiving information from the DSLAM S300. As mentioned above, in the present embodiment this information is obtained by having the management device poll each DSLAM, in respect of each DSL which the management device is managing, four times a day. As mentioned above, the information requested on each poll is the so called Actual Line Rate (ALR) and the Maximum Achievable Line Rate (MALR).

The ALR value provides a reading of the actual line rate that the system has synchronised at. If the system has been configured to deliver a fixed bit rate connection to the end user then the ALR value should be equal to this configured rate. Note that the ALR is only available if there happens to be an active connection in process between the respective CPE 10 and the corresponding DSLAM20.

The MALR figure represents an estimate provided by the DSL system of the maximum possible line rate that is achievable under the current noise conditions. MALR is typically only calculated once during the start-up sequence of the DSL modems and then remains fixed throughout that session. The MALR is used as an indication of line rate because it is generally available even when there is no DSL connection active (in which case the ALR value is given as NULL).

As mentioned above, if the system has been configured to deliver a fixed bit rate connection to the end user then the ALR value is equal to this configured rate, whereas the MALR expresses the maximum rate which the line should be able to support. When the system is configured to run at the maximum possible rate (i.e. not constrained to any fixed rate) then the ALR value and MALR should in theory be the same. However, in practice there is often a small difference between the values since they are calculated slightly differently.

Upon completion of step S300 the method proceeds to step S310 where the data is used to calculate a consistent value. In the present embodiment this is achieved according to the algorithm described below under the heading "The Algorithm". In summary however, the Algorithm operates by averaging the results of the polls taken during each day to maintain a daily average, and averaging the daily averages at the end of each week to generate a weekly average, and averaging the preceding n daily averages to maintain two rolling averages, one with n=2 and one with n=7; in the present embodiment the lowest of the most recently polled Line Rate reading (ALR or MALR) and the two rolling averages is used as the consistent rate. The thus found lowest value is then compared with the Min and Max Line Rates of the various BRAS profiles (to find the Profile for which the lowest value falls between the Profiles Min and Max Line Rates) and in step S320 it is determined whether or not this Profile is different to that currently applied to the respective DSL and if so it is determined that the consistent value has changed and the profile corresponding to this new rate is selected as the new current consistent rate and it is sent to the BRAS in step S330 which is instructed to reconfigure itself according to the new supplied profile.

The profile includes a number of items of information needed by the BRAS, but the most important for the purposes of the present invention is the rate at which the BRAS will permit data to flow to the DSL which is specified in the profile as the ATM payload (and which is approximately equal to the headline rate which is the advertised rate, the headline rate always being a round number); there are a finite number of these different profiles with different headline rates, increasing from 1 Mbs to 8Mbs in steps of 0.5Mbs.

An advantage of this embodiment is that if the user experiences an anomalously low Line Rate as a one off during a single connection, the BRAS will be quickly reconfigured for that connection and then reconfigured back to the higher rate as soon as a more normal connection is made. A disadvantage however is that it is possible for a situation to arise where the Line rate oscillates such that the profile regularly changes and the BRAS needs to be frequently re-provisioned. To overcome this problem, in the present embodiment it is possible to over-ride the selection algorithm manually and insert a default profile - the default profile is then selected as the highest possible profile for the respective DSL (although lower profiles can still be selected automatically according to the algorithm, where the algorithm deems this appropriate).

**Alternative Embodiment**

In an alternative embodiment, at step S320 the most recently polled Line Rating is used to check for a reduced consistent rate whilst the weekly average is used to check for an increased consistent rate (such that the consistent rate may only be increased on a once a week basis when the weekly average rate is calculated, although it may be decreased whenever a lower Line Rating is polled). The consistent rate determined in this way is then used for selecting a profile for applying to the BRAS.

Thus if at the end of a given week the weekly average is found to fall within a new higher headline rate profile, then at step S320 the method proceeds to step S330 and the BRAS is informed (via the centralised BRAS control platform 145) that it should reconfigure itself in respect of the respective DSL according to the supplied (higher rate) profile.

On the other hand, if any single ALR (or MALR if the ALR for a given reading is NULL, indicating that there is no current connection) is detected as being below the Min Line Rate for the current profile (which is in fact somewhat higher than the headline rate because the Line Rate includes a large amount of overhead which does not count as data) then at step S320 it is straightaway determined that the consistent value has changed and the profile corresponding to this new reduced rate is immediately selected as the new current consistent rate and it is immediately sent to the BRAS in step S330 which is instructed to reconfigure itself according to the new (lower) supplied profile. If subsequent polls of the DSLAM reveal that this low rate measurement was an anomaly (for whatever reason), then at the end of the week it is likely that the weekly average will be back in the higher profile and the BRAS will then be re-provisioned at the higher rate. However, since the decision to increase the consistent rate is only taken on, at most, a weekly basis, according to this alternative embodiment, there should not be excessive re-provisioning of the BRAS unless the ALR (or MALR) consistently drops.

**The Algorithm for the main embodiment**

The day is split into 4 time slots used for polling the DSLAM as follows:

| Slot | Start time hh:mm:ss | End time hh:mm:ss |
|------|---------------------|-------------------|
| 1 | 04:00:00 | 09:59:59 |
| 2 | 10:00:00 | 15:59:59 |
| 3 | 16:00:00 | 21:59:59 |
| 4 | 22:00:00 | 03:59:59 |

For each end user the DSLAM is polled twice to return up to two values, the Actual Line Rate and the Maximum Achievable Line Rate. If the end user is not currently logged on at the time the DSLAM is polled the Actual Line Rate is not returned. For certain DSLAM's based on the manufacturer and Build Level the Maximum Achievable Line Rate may not be returned either.

For any given set of two polls to a DSLAM, the management device may receive one, both or neither of the Line Rate values and the management device stores the returned data for each timeslot to use in various calculations and also stores this data historically for the last 30 days.

(Important Note: for all calculations if the Actual Line Rate exists for a time slot this will be used in preference over the Maximum Achievable Line Rate.)

**Daily Average Line Rate Calculation**

Each time the DSLAM is polled, the Daily Average is calculated unless both the Actual and Maximum Achievable Line Rates are NULL in which case the previous calculation is kept. After each poll, the Line Rates for each time slot, for that day only, are added together (note only one Line Rate per time slot) and then this total is divided by the number of time slots for that day (which had at least one Line Rate value).

Example 1A (After 1 poll of the DSLAM)

| Slot | Actual Line Rate | Maximum Achievable Line Rate |
|------|------------------|------------------------------|
| 1 | 4064 | 4192 |

$$\text{Daily Average} = \text{Slot 1 Actual} + / \text{ 1 time slot}$$

$$= 4064 / 1 = 4064$$

Example 1B (After 2 polls of the DSLAM)

| Slot | Actual Line Rate | Maximum Achievable Line Rate |
|------|------------------|------------------------------|
| 1 | 4064 | 4192 |
| 2 | NULL | 4192 |

$$\text{Daily Average} = \text{Slot 1 Actual} + \text{Slot 2 Maximum} / \text{2 time slots}$$

$$= 4064 + 4192 / 2 = 4128$$

Example 1C (After 3 polls of the DSLAM)

| Slot | Actual Line Rate | Maximum Achievable Line Rate |
|------|------------------|------------------------------|
| 1 | 4064 | 4192 |
| 2 | NULL | 4192 |
| 3 | 4096 | 4192 |

$$\text{Daily Average} = \text{Slot 1 Actual} + \text{Slot 2 Maximum} + \text{Slot 3 Actual} / \text{3 time slots}$$

$$= 4064 + 4192 + 4096 / 3 = 4118 \text{ (rounded up to nearest 1kb)}$$

Example 1D (After all 4 polls to the DSLAM)

| Slot | Actual Line Rate | Maximum Achievable Line Rate |
|------|------------------|------------------------------|
| 1 | 4064 | 4192 |
| 2 | NULL | 4192 |
| 3 | 4096 | 4192 |
| 4 | 4096 | 4192 |

Daily Average = Slot 1 Actual + Slot 2 Maximum + Slot 3 Actual + Slot 4 Actual / 4 time slots

$$= 4064 + 4192 + 4096 + 4096 / 4 = 4112$$

Example 2A (After 1 poll of the DSLAM)

| Slot | Actual Line Rate | Maximum Achievable Line Rate |
|------|------------------|------------------------------|
| 1 | NULL | NULL |
| Daily Average = NULL | | |

Example 2B (After 2 polls of the DSLAM)

| Slot | Actual Line Rate | Maximum Achievable Line Rate |
|------|------------------|------------------------------|
| 1 | NULL | NULL |
| 2 | NULL | NULL |
| Daily Average = NULL | | |

Example 2C (After 3 polls of the DSLAM)

| Slot | Actual Line Rate | Maximum Achievable Line Rate |
|------|------------------|------------------------------|
| 1 | NULL | NULL |
| 2 | NULL | NULL |
| 3 | NULL | 2464 |

Daily Average = Slot 3 Maximum / 1 time slot

$$= 2462 / 1 = 2462$$

Example 2D (After all 4 polls of the DSLAM)

| Slot | Actual Line Rate | Maximum Achievable Line Rate |
|------|------------------|------------------------------|
| 1 | NULL | NULL |
| 2 | NULL | NULL |
| 3 | NULL | 2464 |
| 4 | 2400 | 2464 |

$$\text{Daily Average} = \text{Slot 4 Maximum} + \text{Slot 4 Actual} / 2 \text{ time slots}$$

$$= 2462 + 2400 / 2 = 2432$$

If all Actual and Maximum values are NULL for the day, then the daily average will be 15 NULL.

Weekly Actual and Maximum Achievable Line Rate Calculations

After 7 days from the date of commencement of management of a particular DSL by the management device and then every 7 days after this a Weekly Average Line rate is calculated.
This weekly value is be stored historically for a year, 52 occurrences.
On the day specified the Daily Average Line Rates for each day over the previous 7 days are added and then divided by 7 (minus the number of Daily Averages which were NULL).

Example 3 (Daily Average for all 7 days in the week)

| Day | Daily Average |
|-----|---------------|
| 1 | 6127 |
| 2 | 6135 |
| 3 | 6145 |
| 4 | 6178 |
| 5 | 6156 |
| 6 | 6148 |
| 7 | 6122 |

The divisor is 7 minus the number of Daily Averages which are NULL. In this case there are no days which are NULL so 7 - 0 = 7

$$\text{Weekly LR} \quad = D1 + D2 + D3 + D4 + D5 + D6 + D7 / 7$$

$$= 6127 + 6135 + 6145 + 6178 + 6156 + 6148 + 6122 / 7$$

$$= 6145 \text{ (rounded up to nearest 1kb)}$$

Example 4 (No Daily Average for 2 days in the week)

| Day | Daily Average |
|-----|---------------|
| 1 | 3392 |
| 2 | NULL |
| 3 | 3392 |
| 4 | NULL |
| 5 | 3584 |
| 6 | 3520 |
| 7 | 3328 |

As days 2 and 4 are both NULL, if the summation were calculated and divided by 7 this would give an incorrect average value. Therefore the divisor is 7 minus the number of Daily Averages which are NULL. In this case 7 - 2 = 5

$$\text{Weekly LR} = D1 + D3 + D5 + D6 + D7 / 5$$
$$= 3392 + 3392 + 3584 + 3520 + 3328 / 5$$
$$= 3444 \text{ (rounded up to nearest 1kb)}$$

If all daily averages are NULL for the all 7 days, then the weekly average is NULL.
If a NULL value occurs for the weekly average after the first 7 days of service then an exception notification is raised by the management device as a 'warning'.

Rolling Average Calculations

There are two rolling averages used which are both configurable to provide a Line Rate average over n time slots. The rolling averages are not stored historically and every time the daily average is recalculated the rolling averages are recalculated. Therefore the rolling averages could be recalculated up to 4 times a day.
The rolling average is the summation of the last n days daily averages divided by n (minus the number of daily averages which are NULL).

Example 5 if n = 2 (average over the last two days).

| Day | Daily Average |
|-----|---------------|
| 1   | 7712          |
| 2   | 7776          |

$$\text{Rolling Average over n days (n = 2)}$$
$$= (D1 + D2) / 2$$
$$= (7712 + 7776) / 2$$
$$= 15488 / 2$$
$$= 7744$$

Example 5 if n = 4 (average over the last four days) but for 2 days we received no data.

| Day | Daily Average |
|-----|---------------|
| 1   | 6272          |
| 2   | NULL          |
| 3   | NULL          |
| 4   | 6368          |

As days 2 and 3 are both NULL, if the summation were calculated and divided by n (4) this would give an incorrect value. Therefore the divisor is n minus the number of daily averages which are NULL. In this case 4 - 2 = 2

$$\text{Rolling Average over n time slots (n = 4)}$$

$$= (D1 + D4) / 2$$

$$= (6272 + 6368) / 2$$

$$= 12640 / 2$$

$$= 6320$$

If all n values for the Daily Averages are NULL for the Rolling Average then the Rolling Average is left at the previous value.

Updating BRAS Profiles

The BRAS Profiles are updated based on the following Logic.
Each time the Rolling Averages have been recalculated they are compared, with the Latest Line Rate Recorded (ALBR) and the lowest of these three is used to determine the best rate at which to set the BRAS.
The lowest value is compared with the Min Line Rate and Max Line Rate on the DSLAM - RAS Profile Mapping table to identify the suitable BRAS Profile (the profile for which the lowest value falls between the Min and Max Line Rates given in the profile).
If this profile differs from the current BRAS Profile then the current BRAS profile is updated and relevant values are sent to RAP to configure the BRAS.
If the two profiles do not differ, no updates occur.

Example 6

Rolling Average 1 (where n = 2) = 4736
Rolling Average 2 (where n = 7) = 4210
Latest Line Rate (ALBR) = 4576

Rolling Average 2 will be compared with the DSLAM - RAS Profile Mapping table as the lowest of the three values.
For an IPstream Home customer the row which Rolling Average 2 falls within is:

| Min Line Rate | Max Line Rate | ATM Payload | Ras Profile | Headline Rate | Home or Office | DS_PCR | DS_SCR | DS_MBS | SVCTYP |
|---|---|---|---|---|---|---|---|---|---|
| 3968 | 4512 | 3584 | adsl3500 | 3500 | H | 3957 | 3957 | 190 | IPH |

Therefore the suitable BRAS Profile is adsl3500 and if this differs from the current BRAS profile it is updated and the DS_PCR, DS_SCR, DS_MBS and SVCTYP are sent to the centralised BRAS control platform 145.
Override value: An override value is available within the management device (mentioned above as a default value) and can be entered via an override GUI. This is done, for example, where a line is flapping and it is preferable to set it to a lower speed. Where an override has been set it is used, however it should also be noted that the BRAS may be set to a lower speed than the override, but may never be set to anything higher than the override value.

**Claims**

1. A method of provisioning a Broadband Remote Access Server, BRAS, for use in connecting Customer Premises Equipment, CPE, to an Internet Protocol, IP, network via a Digital Subscriber Line, DSL, a Digital Subscriber Line Access Multiplexor, DSLAM, and the BRAS, the method comprising:

   providing a management device for managing the BRAS;

receiving from time to time data readings from the DSLAM indicative of the current or recent line rate of the DSL;
calculating at the management device from the received data readings a consistent rate inditcative of a consistent line rate of the DSL based on a plurality of data readings for the DSL from the DSLAM; and
provisioning the BRAS to restrict data flowing to the DSL to a maximum rate selected by the management device in accordance with the calculated consistent rate.

2. A method as claimed in claim 1 wherein the management device regularly polls the DSLAM to request data readings.

3. A method as claimed in claim 1 or 2 wherein the consistent rate is the lowest rate reported by the DSLAM in each week.

4. A method as claimed in claim 1 or 2 wherein the consistent rate is the lowest of the most recent line rate reading from the DSLAM and one or more rolling average line rates.

5. A management device for automatically provisioning a Broadband Remote Access Server, BRAS, for use in connecting Customer Premises Equipment, CPE, to an Internet Protocol, IP, network via a Digital Subscriber Line, DSL, a Digital Subscriber Line Access Multiplexor, DSLAM, and the BRAS, the management device comprising:

a first interface for receiving from time to time data readings from the DSLAM indicative of the current or recent line rate of the DSL;
a processor unit for calculating from the received data readings a consistent rate indicative of a consistent line rate of the DSL based on a plurality of data readings for the DSL from the DSLAM; and
a second interface for transmitting provisioning messages to the BRAS for provisioning the BRAS to restrict data flowing to the DSL to a maximum rate selected by the management device in accordance with the calculated consistent rate.

6. A management device according to claim 5 including means for regularly polling the DSLAM to request data readings.

7. A management device according to claim 5 or 6 wherein the consistent rate is the lowest rate reported by the DSLAM in each week.

8. A management device according to claim 5 or 6 wherein the consistent rate is the lowest of the most recent line rate reading from the DSLAM and one or more rolling average line rates.

9. A computer program for causing a computer to carry out the method of any of claims 1 to 4 during execution of the program.

10. Carrier means carrying the computer program of claim 9.

Figure 1

Figure 2

EP 1 748 671 A1

START

RECEIVE INFO
FROM DSLAM ———S300

CALCULATE CONSISTENT
VALUE ———S310

HAS
CONSISTENT
VALUE
CHANGED

?

S320

NO

YES

INFORM BRAS OF
NEW CONSISTENT
VALUE ———S330

Figure 3

**European Patent Office**

**EUROPEAN SEARCH REPORT**

Application Number

EP 05 25 4769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/009541 A (THOMSON LICENSING S.A.) 30 January 2003 (2003-01-30) * abstract * * page 2, lines 3-31 * * page 13, line 21 - page 14, line 11 * * figure 9 * ----- | 1-10 | H04Q11/04 H04L12/28 |
| D,A | T ANSCHUTZ ET AL (EDITOR): "DSL Evolution - Architecture Requirements for the Support of QOS-Enabled IP Services" TECHNICAL REPORT DSL FORUM TR-059, [Online] 1 September 2003 (2003-09-01), pages 1-48, XP002364004 Retrieved from the Internet: URL:http://www.dslforum.org/techwork/tr/TR -059.pdf> [retrieved on 2006-01-23] * page 21, paragraph 4.2.5.4 * ----- | 1-10 | |
| | | | **TECHNICAL FIELDS SEARCHED (IPC)** H04Q H04L |

The present search report has been drawn up for all claims

| Place of search | Date of completion of the search | Examiner |
|---|---|---|
| The Hague | 23 January 2006 | Gijsels, W |

**ANNEX TO THE EUROPEAN SEARCH REPORT
ON EUROPEAN PATENT APPLICATION NO.**

EP 05 25 4769

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2006

| Patent document cited in search report | Publication date | Patent family member(s) | Publication date |
|---|---|---|---|
| WO 03009541 A | 30-01-2003 | CN 1535521 A<br>EP 1421744 A1<br>JP 2004536522 T<br>US 2005174938 A1 | 06-10-2004<br>26-05-2004<br>02-12-2004<br>11-08-2005 |

EPO FORM P0459

For more details about this annex : see Official Journal of the European Patent Office, No. 12/82